Europäisches Patentamt

European Patent Office

Office européen des brevets

(11) Publication number: **0 353 213**
A2

# EUROPEAN PATENT APPLICATION

(21) Application number: 89850228.1

(22) Date of filing: 07.07.89

(51) Int. Cl.⁵: **F 16 N 7/34**

(30) Priority: 28.07.88 SE 8802744

(43) Date of publication of application:
31.01.90 Bulletin 90/05

(84) Designated Contracting States:
AT BE DE FR GB IT

(71) Applicant: **Atlas Copco Aktiebolag
Nacka**
**S-105 23 Stockholm (SE)**

(72) Inventor: **Nilsson, Ake Lennart
Viktor Balcks Väg 182
S-122 44 Enskede (SE)**

(74) Representative: **Grundfelt, Gunnar et al
c/o Atlas Copco MCT AB Patent Department
S-104 84 Stockholm (SE)**

(54) **Lubrication device.**

(57) Lubrication device for metering of lubricant to a compressed air conduit. The lubrication device comprises a metering valve (6) which forms a helical connection (9) between an adjustment screw (7) and a valve housing (8) said connection having an adjustable length. The metering valve has a second connection (10) which is parallel with the first connection. Both connections can be blocked by adjustment screw (7).

Fig. 3

**Description**

**Lubrication device**

The present invention relates to a lubrication device for metering of lubricant to a compressed air conduit.

A prior art lubrication device for metering of lubricant to a compressed air conduit is described in GB-A-1 084 489. That lubrication device comprises a housing being formed as a lubricant container. A compressed air channel in form of a venturi tube extends through the housing. Perpendicularly to the venturi tube at its narrowest section a metering valve housing comprising a needle valve is arranged. The needle in the needle valve is axially displaceable, through which the supply of lubricant to the air flowing through the venturi tube may be adjusted.

A problem with lubrication devices of this kind is that adjustments of the needle valve corresponding to low metering values easily cause clogging of the valve. The problem shows up particularly when using synthetic oils but can also be present with mineral oils. The phenomenon as such is well known within hydraulics and the effect arises generally at flows through narrow passages and is not caused by impurities in the oil.

The present invention, which is defined in the subsequent claims, aims at achieving a lubrication device for metering of lubricant to a compressed air conduit which makes it possible to meter very sparingly without a risk for clogging of the metering valve. Furthermore, the lubrication device should allow rich metering or metering high viscosity lubricants.

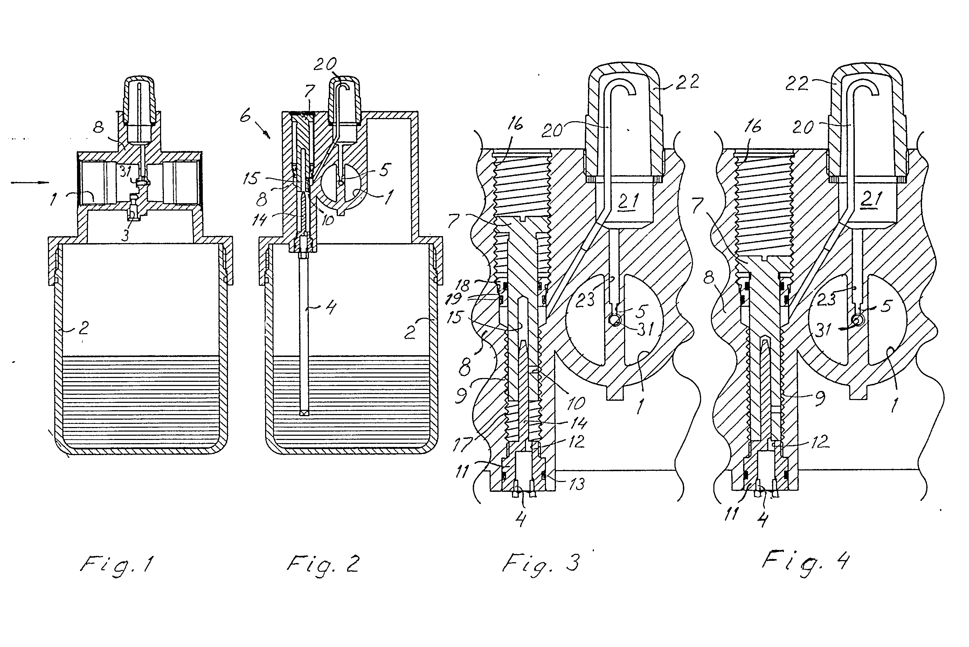

An embodiment of the invention is described below with reference to the accompanying drawing in which fig 1 shows a section through lubrication device according to the invention. Fig 2 shows a section perpendicularly to the section according to fig 1. Fig 3 shows a section on a larger scale of a part of the lubrication device. Fig 4 shows a section corresponding to the one in fig 3 with another position of an adjustment screw.

The lubrication device shown in the drawings comprises a passage 1 for compressed air. The passage is arranged in a cover 8 of a lubricant container 2 and can be positioned in a compressed air conduit which is connected through screwing in at the two ends of passage 1. A channel 3 is arranged in cover 8 for supply of compressed air from passage 1 to lubricant container 2. A suction conduit 4 is arranged for transport of lubricant from the lubricant container to an opening 5 in the wall of a channel 31 which is a part of passage 1. In the suction conduit between the lubrcant container and passage 1 a metering valve 6 is arranged for controlling the supply of lubricant to the compressed air. The cover 8 forms a valve housing for the metering valve 6. In housing 8 there is a bore with an upper thread 16 and a lower thread 17. An adjustment screw 7 is movable along thread 16 through turning of the screw. In the bottom of thread 16 a bushing 18, provided with seals 19 for sealing against housing 8 and adjustment screw 7, is placed.

The asjustment screw 7 is provided with a longitudinal bore 15 and a radial bore 10. The suction conduit 4 is connected to housing 8 by means of a bushing 11 provided with a seal 13 and an upright 14 for cooperation with the bore 15. The lower part of the adjustment screw 7 is cylindrical and forms between itself and thread 17 a first connection 9 which is helical and whose length is adjustable through movement of the adjustment screw. By changing the length of first connection 9 the flow resistance is changed so that the flow through the metering valve is influenced. In the shown embodiment the adjustment screw is smooth and the housing provided with a thread. It can, of course, be the other way round. The essential is that a connection of variable length is created.

When the lubrication device is in operation the inner of lubricant container 2 is exerted to the total pressure of the compressed air stream through passage 1. The lubricant is conducted through suction conduit 4, opening 12 in bushing 11, connection 9 and tube 20 to room 21. Room 21 is covered by a cap 22. From room 21 a channel 23 leads to opening 5 where the static pressure of the compressed air stream prevails. If the adjustment screw 7 is screwed upp to the position shown in fig 2 a second connection is opened in parallel with the first connection since the upright leaves bore 15. Through this lubricant is conducted also from opening 12 through the longitudinal bore 15 and the radial bore 10 to tube 20. In this position rich metering is made possible or metering of high viscosity lubricants.

When the adjustment screw 7 is screwed down from the position shown in fig 2 the upright 14 is moved into bore 15. Through this the second connection 10 is blocked. When the adjustment screw 7 is screw to the bottom as shown in fig 4 the first connection 9 is blocked because the supply of lubricant from opening 12 is cut off by the contact of adjustment screw 7 with bushing 11.

**Claims**

Lubrication device for metering of lubricant to a compressed air conduit comprising a passage (1) for compressed air positioned in said compressed air conduit, a lubricant container (2), a channel (3) for supply of compressed air from said passage to said lubricant container and a suction conduit (5) for transport of lubricant from the lubricant container to an opening (5) in the wall of said passage, whereby the suction conduit comprises a metering valve (6), **characterized** in that the metering valve (6) comprises a first connection (9) with adjustable length arranged between an adjustment screw (7) and a valve housing (8) and a second connection (10) arranged in parallel with said first connection, whereby both said connections can be blocked by said adjustment screw.

Fig. 1

Fig. 2

Fig. 3

Fig. 4